# FASCICULE DE BREVET EUROPEEN

(11) **EP 3 556 114 B1**
(45) Date de publication et mention de la délivrance du brevet: **05.01.2022**
(21) Numéro de dépôt: 17808962.9
(22) Date de dépôt: 08.12.2017
(51) Int. Cl.: H04R 19/00, B06B 1/02, H04R 31/00, B06B 1/06

(54) **DISPOSITIF MICROÉLECTRONIQUE ACOUSTIQUE**
AKUSTISCHE MIKROELEKTRONISCHE VORRICHTUNG
ACOUSTIC MICROELECTRONIC DEVICE

(30) Priorité: 15.12.2016 FR 1662470
(43) Date de publication de la demande: 23.10.2019
(73) Titulaire: Commissariat à l'Énergie Atomique et aux Énergies Alternatives, 75015 Paris (FR)
(72) Inventeur: FANGET, Stéphane, 38690 Le Grand Lemps (FR); COUTIER, Caroline, 38000 Grenoble (FR); ROBERT, Philippe, 38000 Grenoble (FR)
(74) Mandataire: Decobert, Jean-Pascal
(86) Numéro de dépôt international: PCT/EP2017/082094
(87) Numéro de publication internationale: WO 2018/108754

(56) Documents cités:
- EP-A1- 1 810 619
- US-A1- 2004 190 377
- US-A1- 2008 259 725
- US-A1- 2014 073 927

## Description

### DOMAINE DE L'INVENTION

La présente invention concerne en général les dispositifs acoustiques et plus particulièrement les transducteurs acoustiques réalisés par des procédés de micro technologie et notamment de microélectronique et/ou nanoélectronique.. Ces dispositifs englobent notamment en plus des dispositifs à finalité purement acoustique, des dispositifs électroniques, micromécaniques ou électromécaniques (MEMS, NEMS...)

Elle s'adresse à des dispositifs acoustiques à membrane, ces composants pouvant s'appliquer à des domaines aussi variés que l'imagerie ultrasonore, le contrôle non destructif, les filtres acoustiques pour les transmissions en radiofréquences, la reconnaissance de geste.

Cette invention propose une structure, de préférence pour dispositifs acoustiques, à base de membranes permettant l'isolation acoustique de membranes constituant le dispositif.

### ARRIERE-PLAN TECHNOLOGIQUE

L'emploi de dispositifs microélectroniques s'est amplifié et diversifié. On rencontre dorénavant de tels dispositifs dans des secteurs aussi variés que les appareils médicaux et les capteurs. Notamment, le développement des MEMS a généralisé les débouchés de la microélectronique et permet de réaliser des dispositifs membranaires dont des transducteurs acoustiques capables de fonctionner sur l'ensemble des fréquences acoustiques (ultrason, audible).

Les transducteurs ultrasons peuvent être utilisés pour les applications suivantes : sonde échographiques, interfaces sans contact, sonar, traitement médical tel que destruction de cellules malades ou dispense localisée de médicament, capteur d'empreintes digitales, communication.

Dans le domaine audible, on peut réaliser les micros hautparleurs.

Les transducteurs peuvent employer diverses techniques d'activation de la membrane ou de mesure de l'activité de la membrane. L'une d'entre-elles utilise la piézoélectricité. Un tel transducteur, connu sous le nom « Piezoelectric Micromachined Ultrasonic Transducer » ou sous son acronyme PMUT, génère et/ou détecte une onde ultrasonore au moyen d'une membrane mise en mouvement par un actionneur piézoélectrique déposé en couche mince sur cette dernière pour la génération de l'onde et par la génération de charges électriques dans la couche piézoélectriques lors de la détection.

D'autres transducteurs obéissent à un contrôle capacitif. Un tel transducteur, connu sous le nom « Capacitive Micromachined Ultrasonic Transducer » ou sous son acronyme CMUT, génère et/ou détecte quant à lui une onde ultrasonore au moyen d'une membrane mise en mouvement par effet capacitif entre la membrane et le fond de la cavité du CMUT. D'autres transducteurs appliquent d'autres techniques telles que le « thin film bulk acoustic resonator » (résonateur acoustique à couche mince sur substrat brut) ou FBAR.

Dans tous les cas, on emploie une ou une pluralité de membranes pour former la partie mécanique vibratoire. Elle est suspendue au-dessus d'une cavité et raccordée au substrat par des ancrages. Elle produit ainsi une structure déformable essentiellement en flexion, comme une nappe. Bien évidemment, la fabrication de ces membranes est en soi une difficulté technique au regard de l'échelle de dimension concernée, étant rappelé que l'épaisseur de la membrane est souvent bien inférieure à 100 microns (10⁻⁶m) et généralement de moins de 10 microns. Une difficulté est de préserver la fiabilité mécanique de la suspension de la membrane durant les étapes de fabrication. Un autre aspect est la qualité de conduction acoustique dont l'homogénéité de la transmission solidienne des ondes dans la membrane et l'isolation acoustique de celle-ci. Il faut aussi construire les parties électriques (telles que les électrodes, les éléments de reprise de contact, les couches isolantes intercalaires) et certaines de ces parties sont en coopération intime avec la membrane (par exemple les électrodes et la couche piézoélectrique d'un transducteur PMUT).

Les membranes doivent être aussi isolées acoustiquement que possible pour éviter leur couplage acoustique ou les vibrations parasites. Sur ce point, le document US 2004/0190377 A1 décrit une méthode pour isoler des éléments d'un réseau de capteurs. Cette publication propose la formation de tranchées espaçant des groupes de capteurs et formant une barrière acoustique entre ces groupes de capteurs. Néanmoins, se pose alors un problème de raccordement électrique des capteurs, car les tranchées sont autant des obstacles au passage des ondes qu'à la fabrication des reprises de contact ou autre organe d'adressage électrique des capteurs.

Le document US 2014/073927 A1 décrit un transducteur ultrasonore comprenant une tranchée formée à travers l'électrode supérieure, la membrane, le support et le substrat supérieur.

C'est un objet de l'invention que de pallier au moins en partie les inconvénients des techniques actuelles.

### RESUME DE L'INVENTION

Un aspect non limitatif de l'invention est relatif à un dispositif microélectronique de type acoustique comprenant un support, un jeu d'au moins une membrane suspendue sur une face du support au-dessus d'une cavité par une zone d'ancrage, et au moins une tranchée d'isolation acoustique disposée de manière adjacente à la membrane.

De manière avantageuse, il comporte au moins un pont raccordant des portions de deux bords opposés de la tranchée, afin de préférence de relier la zone d'ancrage de la membrane au support, et situé en surplomb d'au moins une zone de la tranchée de sorte à former dans ladite zone de la tranchée un caisson d'isolation acoustique en-dessous du pont.

Ainsi, l'invention assure une isolation acoustique efficace, éventuellement continue, autour de la membrane ou de plusieurs membranes, tout en permettant un raccordement électrique simplifié depuis l'extérieur de la tranchée, vers la zone où la au moins une membrane est formée.

Un autre aspect séparable de la présente invention concerne un procédé de fabrication d'un dispositif microélectronique de type acoustique comprenant, sur la base d'un support, une réalisation d'un jeu d'au moins une membrane suspendue sur une face du support au-dessus d'une cavité par une zone d'ancrage et d'au moins une tranchée d'isolation acoustique disposée de manière adjacente à la membrane, caractérisé par le fait qu'il comprend la réalisation d'au moins un pont raccordant des portions de deux bords opposés de la tranchée, de préférence afin de relier le support à la zone d'ancrage de la membrane, et situé en surplomb d'au moins une zone de la tranchée de sorte à former dans ladite zone de la tranchée un caisson d'isolation acoustique en-dessous du pont.

### BREVE INTRODUCTION DES FIGURES

D'autres caractéristiques, buts et avantages de la présente invention apparaitront à la lecture de la description détaillée qui suit, en regard des dessins annexés, donnés à titre d'exemples, non limitatifs, et sur lesquels :
- La figure 1 illustre un exemple de transducteur du type PMUT selon l'état de la technique ;
- La figure 2 montre de dessus un premier mode de réalisation de l'invention et la figure 3 en est une vue en coupe ;
- Les figures 4 à 16 montrent des étapes potentielles de fabrication du dispositif ;
- Les figures 17 à 23 présentent une possibilité de formation d'une portion d'isolation électrique ;
- Les figures 24 et 25 illustrent deux configurations possibles de dispositif.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DETAILLEE

Avant d'entamer une revue détaillée de modes de réalisation de l'invention, sont énoncées ci-après des caractéristiques optionnelles qui peuvent éventuellement être utilisées suivant toute association ou alternativement :
- la tranchée 62a,b,c,d ; 63a,b forme un contour fermé autour du jeu d'au moins une membrane 3 ;
- le pont 64 est en surplomb d'une partie seulement de la tranchée 62a,b,c,d ; 63a,b ;
- au moins un élément de connexion électrique passe sur le pont 64 ;
- au moins une électrode 51 est au-dessus de la membrane 3 et en continuité électrique avec un des au moins un élément de connexion ;
- un empilement comprend une première électrode 51 au contact d'une face supérieure de la membrane 3, une couche piézoélectrique 53 et une deuxième électrode 54, la première électrode 51 étant en continuité électrique avec un premier élément de connexion, la deuxième électrode 54 étant en continuité électrique avec un deuxième élément de connexion ;
- au moins un jeu 90 comporte une pluralité de membranes 3 ;
- le dispositif comporte au moins une tranchée intermédiaire d'isolation acoustique entre au moins deux membranes 3 de la pluralité de membranes 3.
- au moins une partie superficielle du pont 64 est en matériau diélectrique ;
- au moins une partie superficielle du pont (64) est en matériau diélectrique formant au moins une partie de ladite portion diélectrique (83)
- le dispositif comprend une portion diélectrique 83, la portion diélectrique étant configurée pour isoler électriquement la membrane 3 du support 1, notamment dans le cas d'un CMUT;
- ladite portion diélectrique (83) est formée en outre par au moins une partie située dans la zone d'ancrage 31 et/ou dans une bordure de la membrane 3 raccordée à la zone d'ancrage 31 ;
- le dispositif comprend selon un mode particulier au moins deux jeux 90 d'au moins une membrane 3, les jeux 90 étant concentriques et chacun entouré par une tranchée annulaire 63a,b.
- la réalisation du pont (64) comprend :
   ∘ une gravure d'une zone de support à partir de la face du support (1), configurée pour former des piliers (72) et/ou des trous (73) dans la zone de la tranchée ;
   ∘ un recuit de la zone de la tranchée configuré pour réorganiser la matière des piliers (72), et/ou respectivement de la matière autour des trous, en une nappe orientée parallèlement à la face (21) du support (1) et raccordée aux deux bords opposés de la tranchée (62a,b,c,d ; 63a,b).
- on opère, outre la gravure de la zone du support (1), une gravure complémentaire configurée pour former une partie de la tranchée hors de la zone du pont.
- la réalisation d'au moins une membrane (3) du jeu comprend :
   ∘ une gravure du support à partir de la face (21) du support (1), configurée pour former des piliers (71) et/ou des trous dans la zone de la membrane ;
   ∘ un recuit de la zone de la membrane configuré pour réorganiser la matière des piliers (71), et/ou respectivement de la matière autour des trous (73), en une nappe orientée parallèlement à la face (21) du support (1) et raccordée au support par la zone d'ancrage (31).
- la réalisation de la au moins une membrane (3) et la réalisation du pont (64) sont simultanées.
- Notamment pour les applications de type CMUT, le matériau de la face (21) du support (1) peut-être électriquement conducteur et dans ce cas le procédé comprend une formation d'une portion diélectrique (83) par une oxydation localisée de la zone d'ancrage (31) et/ou dans une bordure de la membrane (3) raccordée à la zone d'ancrage (31) et configurée pour isoler électriquement la membrane (3) du support.
- le matériau de la face (21) du support (1) est électriquement conducteur, le procédé comprenant une formation d'une couche diélectrique sur une face supérieure du pont (64) par une oxydation localisée du pont (64). Bien entendu, le support pourrait-être également isolant voire semi-conducteur (par ex en silicium) notamment pour les applications de type PMUT.

Eventuellement, les options suivantes sont aussi possibles :
- le support comprend une couche superficielle en matériau semi-conducteur, de préférence en silicium, de préférence monocristallin.
- la tranchée est au moins aussi profonde que la cavité.
   - Le recuit est opéré à une température supérieure à 800°C, voire 1000°C, de préférence à plus de 1100°C et/ou à moins de 1250°C.
- Le recuit est opéré durant plus de 1 minute et/ou moins de 30 minutes.
- Le dispositif comprend un support 1 et au moins une membrane 3 suspendue sur une face 21 du support 1 au-dessus d'une cavité 34 par une zone d'ancrage 31, et il comporte une portion diélectrique 83 de raccordement de la membrane 3 au support 1, faite d'un matériau distinct de celui d'une partie principale 32 de la membrane 3 ;
- au moins une partie de la portion diélectrique 83 est située dans une bordure d'ancrage de la membrane 3 raccordée à la zone d'ancrage 31 ;
- la partie de la portion diélectrique 83 située dans la bordure d'ancrage 31 présente une dimension en épaisseur supérieure à celle de la partie principale 32 de la membrane 3 ;
- au moins une partie de la portion diélectrique 83 est située dans la zone d'ancrage 31 ;
- la partie de la portion diélectrique 83 située dans la zone d'ancrage 31 présente une dimension en épaisseur supérieure à celle de la partie principale 32 de la membrane 3 ;
- la portion diélectrique 83 est faite d'un oxyde du matériau de la partie principale 32 de la membrane 3 ;
- la partie principale 32 de la membrane 3 est en matériau électriquement conducteur et dans lequel la portion diélectrique 83 est configurée pour isoler électriquement la partie principale 32 de la membrane 3 relativement au support 1 ;
- la partie principale 32 de la membrane 3 est en silicium monocristallin.
- au moins un transducteur acoustique comprend la au moins une membrane 3.
   - le dispositif selon l'invention peut comprendre dans un même jeu des membranes pouvant être différentes (en particulier par leurs tailles pour avoir des fréquences d'émissions acoustiques différentes) et/ou dans des jeux différents des membranes pouvant être de formes identiques et/ou différentes.
   - Le dispositif comprend au moins un jeu d'au moins un transducteur acoustique, chaque transducteur acoustique comprenant une membrane 3 du jeu d'au moins une membrane 3, qui lui est affectée.

Suivant un aspect séparable, le procédé de fabrication d'un dispositif microélectronique comprend, sur la base d'un support, une réalisation d'au moins une membrane suspendue sur une face du support 1 au-dessus d'une cavité 34 par une zone d'ancrage 31, caractérisé par le fait qu'il comprend une formation d'une portion diélectrique 83 de raccordement de la membrane 3 au support 1, faite d'un matériau distinct de celui d'une partie principale 32 de la membrane 3, par une oxydation localisée.

Le procédé est éventuellement tel que :
- l'oxydation localisée est opérée au moins sur une bordure d'ancrage 33 de la membrane 3 raccordée à la zone d'ancrage 31 ;
- l'oxydation localisée est opérée au moins sur la zone d'ancrage 31 ;
- la formation de la portion diélectrique 83 comprend un masquage d'une partie de la face du substrat 2 configuré pour ne laisser apparente qu'une surface correspondant à celle de la portion diélectrique 83 à former, puis une oxydation thermique depuis ladite surface ;
- l'oxydation est produite sur une profondeur au moins égale à une dimension en épaisseur d'une partie principale 32 de la membrane 3 ;
- la réalisation de la membrane 3 comprend :
   - une gravure du support 1 à partir de la face 21 du support 1, configurée pour former des piliers 71 et/ou des trous 73 dans la zone de la membrane 3 ;
   - un recuit de la zone de la membrane configuré pour réorganiser la matière des piliers 71, et/ou respectivement la matière autour des trous 73, en une nappe orientée parallèlement à la face 21 du support 1 et raccordée au support 1 par la zone d'ancrage 31 ;
   - après l'oxydation, un aplanissement de la face 21 du support 1 est opéré.

Il est précisé que, dans le cadre de la présente invention, le terme « sur» ou « au-dessus » ne signifie pas obligatoirement « au contact de ». Ainsi, par exemple, le dépôt d'une couche sur une autre couche, ne signifie pas obligatoirement que les deux couches sont directement au contact l'une de l'autre mais cela signifie que l'une des couches recouvre au moins partiellement l'autre en étant soit directement à son contact, soit en étant séparée d'elle par un film, encore une autre couche ou un autre élément. Une couche peut par ailleurs être composée de plusieurs sous-couches d'un même matériau ou de matériaux différents.

Il est précisé que dans le cadre de la présente invention, l'épaisseur d'une couche ou d'un substrat se mesure selon une direction perpendiculaire à la surface selon laquelle cette couche ou ce substrat présente son extension maximale.

L'emploi du singulier pour certains éléments de l'invention ne signifie pas obligatoirement qu'un élément donné est présent de manière unique dans l'invention. Le mot « un » ou « une » ne signifie donc pas exclusivement respectivement « un seul » ou « une seule » à moins qu'il en soit disposé autrement.

Certaines parties du dispositif de l'invention peuvent avoir une fonction électrique. Certaines sont employées pour des propriétés de conduction électrique et on entend par élément de connexion ou électrode ou équivalent, des éléments formés d'au moins un matériau ayant une conductivité suffisante, dans l'application, pour réaliser la fonction souhaitée. D'autres parties, au contraire, sont employées pour des propriétés d'isolation électrique et tout matériau ayant une résistivité suffisante pour réaliser cette isolation sont concernées et sont notamment appelées diélectriques.

Un objectif de l'invention est la réalisation de dispositifs à membrane notamment pour la fabrication de transducteurs. Dans les modes de réalisation illustrés et décrits ci-après, on détaille la réalisation de systèmes unitaires et individuels. Il est entendu que l'invention peut être mise en oeuvre sur des plaques du type dénommé wafers pour une fabrication collective d'une pluralité de dispositifs, notamment une pluralité de transducteurs, ces plaques pouvant ensuite faire l'objet d'une découpe pour individualiser les dispositifs en question.

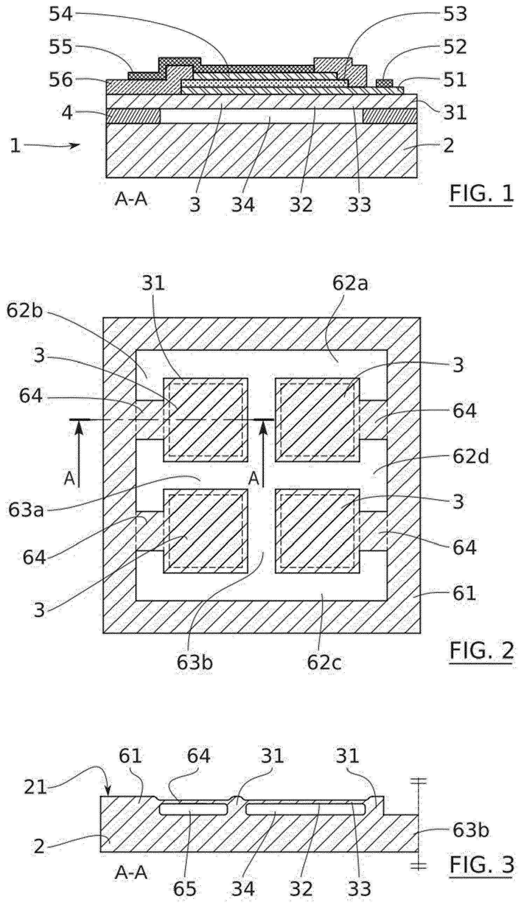

La figure 1 illustre schématiquement la technologie implémentée dans un transducteur du type PMUT et à laquelle l'invention peut s'appliquer. Un support 1 forme la base du dispositif membranaire et comporte un substrat 2, par exemple fait de matériaux semi-conducteurs tels du silicium. Une membrane 3 est suspendue sur le support 1 au-dessus d'une cavité 34. La cavité 34 est ici délimitée par un bord de cavité 4. Par exemple, le bord 4 peut être issu d'une couche d'un matériau isolant, par exemple du dioxyde de silicium, couche dans laquelle la cavité 34 a été creusée, par exemple par une gravure sèche ou humide. Selon l'état de la technique, au-dessus du bord 4, des zones d'ancrage 31 raccordent la membrane 3 au reste du support 1. La zone d'ancrage 31 est la partie du support 1 à laquelle la partie mobile, la membrane, est reliée. La zone d'ancrage 31 peut être continue ou non autour de la membrane 3. La membrane 3 est ici une partie, dont la face inférieure est en regard de la cavité 34, d'une couche comprenant par ailleurs les zones d'ancrage 31. La couche dont est issue la membrane 3 peut être en matériaux diélectriques ou conducteurs suivant le mode de fabrication. La membrane 3 comporte une partie principale 32 s'étendant de préférence vers son centre et une partie de bordure 33 formant une portion de raccordement de la membrane 3 à la zone d'ancrage 31 surmontant les bords 4 de la cavité 34.

Du fait de sa suspension, la membrane 3 est susceptible d'une mobilité, par exemple par vibration suivant une direction de flexion correspondant à une déformation de nappe. Un empilement à vocation électrique est conjugué à la membrane 3 de sorte à produire, dans le cas d'un transducteur, une capacité de génération de mouvement vibratoire de la membrane 3 ou une capacité de détection de tels mouvements. De manière typique, dans le cas d'un transducteur PMUT, l'empilement de couches comprend, de préférence immédiatement au-dessus de la membrane 3, une première électrode 51 réalisée en un matériau électriquement conducteur, de préférence métallique. Une reprise de contact 52 offre la possibilité de raccorder la première électrode 51 à une autre partie du dispositif ou à l'extérieur, pour l'échange de signaux électriques. Ce type de transducteurs fonctionne sur la base d'une couche électro sensible piézoélectrique. Celle-ci est disposée au-dessus de la première électrode 51 et correspond au repère 53. L'empilement se poursuit par une électrode supérieure 54 qui peut par exemple être du même type de matériau que ceux utilisés pour l'électrode inférieure 51. De manière similaire, une reprise de contact 55 permet le raccordement de l'électrode supérieure 54. Des zones isolantes 56 permettent de distinguer ces couches et notamment d'éviter des courts-circuits entre les portions correspondant à l'électrode inférieure 51 et sa reprise de contact et les portions correspondant à l'électrode supérieure 54 et sa reprise de contact.

La technologie de capteur donnée ci-dessus n'est pas limitative et l'invention peut s'appliquer à d'autres technologies, notamment à des capteurs de type capacitif. Dans tous les cas, il est proposé des aspects innovants séparables permettant d'améliorer la fabrication de la membrane et/ou des éléments l'environnant.

Un premier aspect de l'invention concerne l'isolation au moins acoustique de la ou des membranes relativement au reste du support. Dans certaines applications en particulier de type CMUT, l'isolation électrique de la membrane peut être également assurée par l'invention. Dans ce cadre, la figure 2 illustre un dispositif comportant des tranchées d'isolation acoustique de structure spécifique.

À cette figure, quatre membranes 3 sont présentes dans le dispositif (ce nombre n'est aucunement limitatif) et sont chacune suspendue sur une cavité 34 par l'intermédiaire d'une zone d'ancrage 31. Les zones d'ancrage 31 ne sont pas des parties directement dans la continuité du reste du support mais sont au contraire séparées du reste du support par une ou plusieurs tranchées. Plus précisément, les membranes 3 sont isolées d'une zone de pourtour 61 du support 1 par une tranchée périphérique. Cette dernière est dans l'exemple formée par quatre portions de tranchées 62 a, b, c, d formant un contour fermé de sorte à isoler continûment les membranes 3 de la zone de pourtour 61 du support. La forme rectangulaire ou carrée représentée n'est pas limitative du contour fermé que l'on peut réaliser.

Toujours dans l'exemple considéré, des tranchées intermédiaires 63a,b sont en outre constituées de sorte à isoler les membranes 3 les unes des autres. Dans cet exemple, on comprend que chaque zone d'ancrage 31 de chaque membrane 3 est espacée d'une autre partie du dispositif par l'intermédiaire d'une tranchée l'entourant complètement. Bien que l'isolation acoustique s'en trouverait amoindrie, il n'est pas exclu que le contour d'isolation formée par la ou les tranchées ne soit pas un contour fermé autour du système à membrane.

De préférence, la profondeur des tranchées 62 a, b, c, d et/ou 63 a, b, déterminée suivant une dimension en épaisseur des couches du support 1, et au moins suffisante pour parvenir à un niveau de profondeur équivalent à la position d'une portion de fond de la cavité 34. Les tranchées forment de manière générale des rainures allongées dans un plan perpendiculaire à l'épaisseur du substrat. Leur longueur est de préférence bien supérieure à leur largeur, de préférence au moins 5 fois supérieure. De préférence, les tranchées ne sont pas débouchantes sur la face du support opposé à la face 21.

Cette configuration est avantageuse en termes d'isolation acoustique mais génère une difficulté évidente pour la réalisation des parties électriques, et notamment pour la disposition de l'empilement d'électrodes et/ou de reprise de contact du fait du relief en creux engendré par les tranchées. Pour y remédier, le dispositif de l'invention présente un pont 64 équipant au moins un système membranaire, mais de préférence tous les systèmes membranaires du dispositif, et permettant à la fois de conserver l'isolation acoustique issue de la tranchée mais aussi d'offrir un passage de raccordement électrique. Le raccordement électrique peut par exemple se faire avec une électrode présente sur la membrane 3; la liaison entre un élément de connexion et l'électrode peut bien entendu se situer en tout ou partie sur la membrane 3 ou sur la zone d'ancrage 31 ou encore sur le pont 64 (notamment suivant la taille de l'électrode). Un tel pont 64 est visible en vue de dessus à la figure 2 en surplomb d'une portion de tranchée. Le pont 64 peut affleurer au niveau de la face supérieure 21 du substrat 2 (ou plus généralement du support 1) ou être légèrement en creux, notamment suivant des impératifs de fabrication, comme le montre la figure 3. La tranchée considérée ainsi que la portion de tranchée sous le pont 64 qui définit un caisson 65 préservent ou pour le moins augmentent l'isolation acoustique latérale. Dans le mode de réalisation des figures 2 et 3, le pont 64 s'étend sur une portion relativement faible de la surface de tranchées. Un mode de réalisation fourni ultérieurement concerne un pont 64 complet.

D'une manière générale, le pont 64 s'étend au-dessus de la tranchée de sorte à rejoindre, par une de ses extrémités, la zone d'ancrage 31 d'une membrane 3 et, par l'autre de ses extrémités, le reste du support 1, de préférence en joignant une paroi latérale de tranchée.

On donne maintenant un mode de fabrication du pont 64 à partir du matériau de la couche superficielle du support 1, par exemple sur la base d'un substrat 2 en matériau semi-conducteur, de préférence du silicium, avantageusement monocristallin. On verra que l'on peut par ailleurs fabriquer la membrane 3 de manière concomitante.

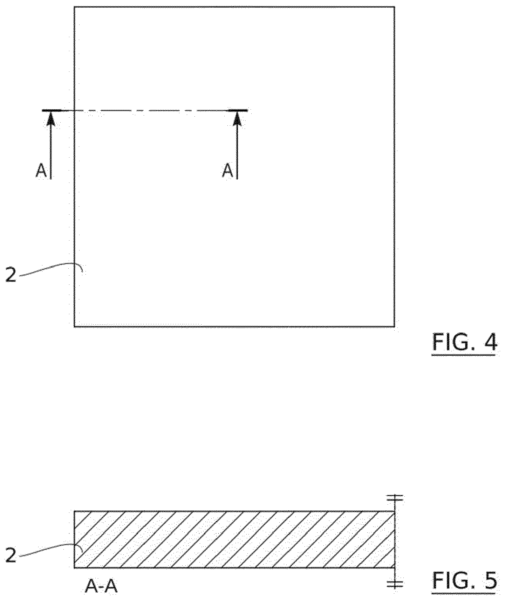

Dans ce cadre, le procédé de fabrication peut débuter sur la base d'un substrat 2 schématiquement représenté aux figures 4 et 5. Sur cette base, on opère une ou plusieurs étapes de gravure, par exemple par gravure sèche à base de plasma, de sorte à produire des parties en creux dans le substrat 2. Les parties en creux correspondent pour partie à la définition des tranchées 62, a, b, c, d et 63 a, b. Pour une autre partie, les parties en creux définissent les éléments de matière qui vont permettre de réaliser les ponts 64 et/ou les membranes 3.

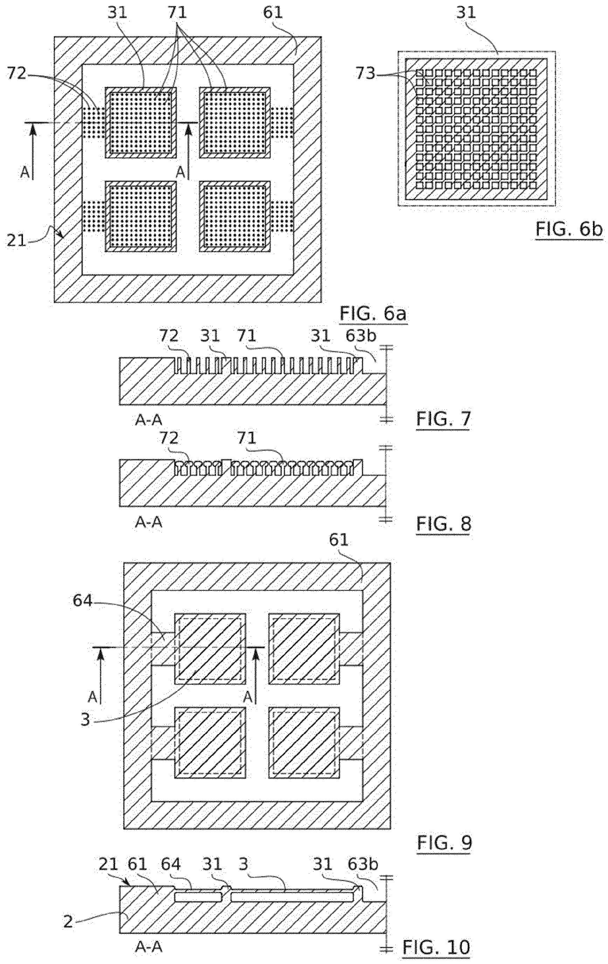

Sur ce dernier point, la figure 6a montre que la gravure produit une pluralité de piliers s'étendant suivant la direction en épaisseur du substrat 2 et espacés les uns des autres, avantageusement de manière régulière, par l'enlèvement de matière fournie par la gravure. De préférence, les piliers sont d'un seul matériau sur toute leur longueur et sont en saillie sur un fond qui sera le fond de cavité ou le fond de la tranchée.

Le contour d'un réseau de ces piliers correspond globalement au contour de la membrane à former. Le contour d'un autre réseau de ces piliers correspond globalement au contour du pont à former.

Il est entendu que ces gravures peuvent être simultanées ou successives. Leur ordre n'est pas non plus limitatif. L'invention n'est pas non plus limitée par le type de gravure. Notamment, on peut mettre en oeuvre des étapes de masquage permettant de définir les motifs à graver qui ne sont pas représentées.

À titre d'exemple, le rapport de forme entre la profondeur des piliers et leur diamètre peut être compris entre 4 et 8. La profondeur et la taille des motifs ainsi gravés ainsi que leur localisation définisse la forme de la membrane et/ou du pont, son épaisseur et la profondeur de cavité. Typiquement, la profondeur des piliers peut être comprise entre 1 et 10 microns, et de préférence entre 3 et 4 micros. Leur plus grande dimension dans un plan transversal à l'épaisseur du substrat 2 (plus grande largeur ou diamètre) peut être comprise entre 400 et 1000 nm, et de préférence entre 500 et 800 nm. Les espaces ménagés entre les piliers peuvent être de la même grandeur. Dans ces conditions, on peut obtenir au final une épaisseur de ponts et/ou une épaisseur de membranes comprise entre 1 micron et 3 microns. Les piliers peuvent présenter une section circulaire dans un cas préféré.

La figure 7 illustre en coupe le résultat de la gravure ou des étapes de gravure permettant de réaliser les piliers qui sont référencés 71 pour les piliers permettant de former la membrane 3 et 72 pour les piliers permettant de réaliser le pont 64.

La figure 6b présente une alternative aux piliers, sous la forme de trous 73. Dans cet exemple, une pluralité de trous est gravée de sorte à définir un quadrillage. Cependant, la forme des trous n'est pas limitative, même si une forme carrée est illustrée et les trous peuvent être notamment de section circulaire. Comme dans le cas précédent, on forme ainsi des réseaux dans lesquels des zones de vide et des zones de matière sont juxtaposées. Les exemples donnés précédemment pour les formes et les dimensions de piliers sont applicables directement aux formes et dimensions des trous 73. En outre, l'illustration de la figure 6b est donnée pour la formation d'un réseau de trous en vue de la fabrication de la membrane 3 mais une disposition strictement équivalente est applicable en vue de la fabrication alternative ou cumulative du pont 64. Éventuellement, certaines parties suspendues peuvent être réalisées à la base de réseaux de piliers et certaines autres à la base de réseaux de trous.

En ce qui concerne le réseau de piliers ou de trous destiné à former une membrane 3, il est produit à l'intérieur d'un contour correspondant à celui de la zone d'ancrage 31 qui constitue dans cet exemple une zone non gravée du substrat 2 d'origine. Dans le cas d'une membrane 3 suspendue par une partie seulement de son pourtour, la zone d'ancrage n'entoure que partiellement voire que faiblement la membrane 3. En ce qui concerne le réseau de piliers ou de trous destiné à former un pont 64, il est produit entre la zone d'ancrage 31 de la membrane correspondante et un bord de tranchée.

Qu'il s'agisse de ponts ou de membranes, la formation de ces parties suspendues peut ensuite être réalisée par l'intermédiaire d'un recuit. L'objectif est que les atomes de la matière destinée à former la partie suspendue migrent étendent à atteindre une configuration d'énergie minimum les amenant à fermer la portion qui était ajourée par le réseau de piliers ou de trous. À titre d'exemple, la température de recuit peut être comprise entre 1100°C et 1250°C. L'intervalle de temps correspondant au recuit peut être compris entre 5 minutes et 30 minutes. Le recuit est avantageusement non oxydant. Il est de préférence formé sur l'ensemble du substrat de sorte à produire simultanément une pluralité de parties suspendues. Par exemple, dans le cas d'un dispositif membranaire à une membrane et un pont, ces dernières parties peuvent être réalisées simultanément lors d'un seul recuit. En outre, si le matériau de départ est du silicium monocristallin, les parties suspendues en résultant le sont également. La figure 8 donne un exemple d'une modification progressive de la configuration des piliers au cours du recuit. Le haut des piliers s'affaisse quelque peu et la base des piliers se désolidarise progressivement du fond de l'ensemble. L'ensemble de la matière converge vers une position de nappe, sensiblement parallèle au fond et rejoint les bords latéraux non gravés (ceux de la paroi de tranchée ou de paroi de zone d'ancrage qui délimite aussi la tranchée).

Le recuit va généralement abaisser légèrement le niveau des parties suspendues relativement au niveau de la face 21 du substrat 2. Si besoin, un rattrapage de niveau et/ou un ajustement de l'épaisseur de la partie suspendue peut être réalisé, par exemple par réduction d'épaisseur, notamment par une technique de polissage mécanique ou mécanochimique, ou suivant un autre exemple par accroissement d'épaisseur, notamment par une croissance épitaxiale.

Dans le cas d'un pont 64, le caisson 65 sous-jacent est ainsi formé sans avoir recours à une couche sacrificielle. Dans le cas d'une membrane 3, la cavité 34 sous-jacente est ainsi formée sans avoir recours à une couche sacrificielle.

Le fruit de ces étapes est illustré aux figures 9 et 10 correspondant respectivement aux figures 2 et 3.

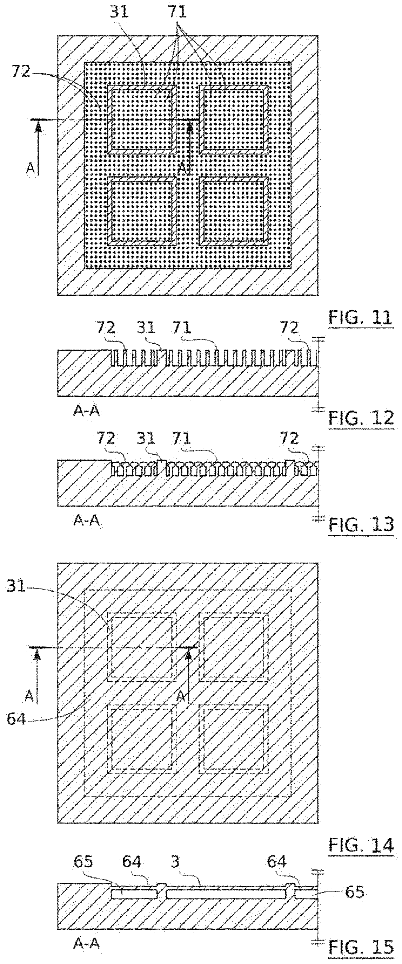

Dans une variante de l'invention, représentée à la figure 11, on cherche à produire un pont 64 qui s'étend sur l'intégralité de la surface des tranchées. Pour y parvenir, on génère un réseau de piliers ou un réseau de trous sur l'ensemble de la surface des tranchées correspondantes. On comprend que le recuit va engendrer une partie suspendue de couverture complète des tranchées. Dans le cas de la figure 11, aussi bien la tranchée périphérique 62a, b, c, d que les tranchées intermédiaires 63a, b sont destinées à être recouvertes. Bien entendu, seule une partie de ces tranchées pourrait être recouverte. De manière correspondante, la figure 12 donne une coupe révélant que les piliers, dans cet exemple, sont créés sur les deux sections de tranchée visibles à cette vue. De manière correspondante à la figure 8, la figure 13 illustre le déplacement de matière au cours du recuit. Hormis les différences de localisation des trous et/ou des piliers, les détails donnés en référence au mode de réalisation précédent sont applicables.

La figure 14 et la figure 15 présentent le résultat de ces étapes avec des tranchées non apparentes depuis la face 21 du substrat. On comprend que l'accès à la surface supérieure des membranes est grandement facilité dans une telle disposition.

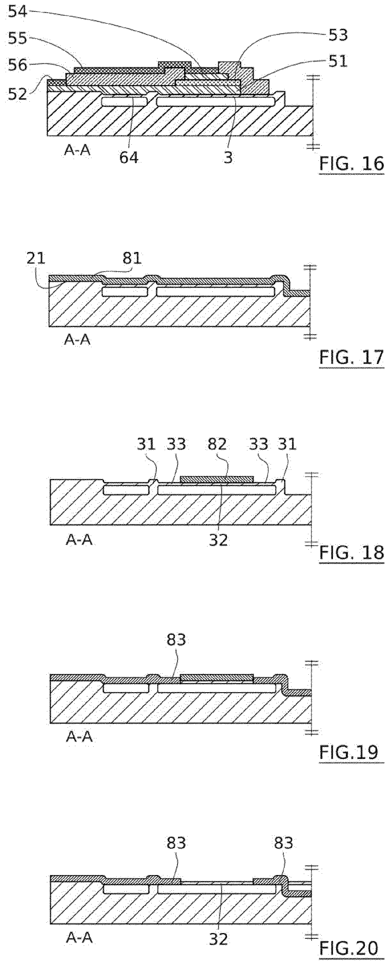

Que le pont 64 soit complet ou seulement partiel à la surface des tranchées, il autorise un raccordement électrique facilité au-dessus de la surface du pont. Ainsi, dans le cas de la figure 16, un dépôt d'un matériau conducteur, de préférence métallique, a été opéré de sorte à couvrir au moins une partie de la surface supérieure de la membrane 3 et à s'étendre au-dessus du pont 64. Éventuellement, d'autres couches peuvent s'étendre parallèlement ou en superposition au-dessus du pont 64, comme dans le cas représenté avec un transducteur PMUT.

On notera que dans un aspect de l'invention, le matériau de la membrane 3 peut être conducteur, notamment du silicium monocristallin, de sorte que la membrane 3 elle-même peut former une partie à vocation électrique. En ce sens, il peut suffire de produire un élément de reprise de contact de sorte à connecter électriquement la membrane pour réaliser le raccordement au-dessus de celle-ci. C'est particulièrement le cas pour la mise en oeuvre d'une technologie capacitive du type transducteur CMUT dont un exemple est donné plus loin.

Un autre aspect de l'invention est relatif à la formation de portions diélectriques à proximité de la membrane et/ou dans une partie de celle-ci. Un intérêt de cet aspect est de permettre de corriger d'éventuels effets négatifs du procédé précédemment décrit pour la fabrication de la membrane 3. En effet, par la méthode de gravure de réseau de piliers ou de trous puis de recuit, on constate généralement une irrégularité de section de la membrane dans la zone de celle-ci qui se raccorde à la zone d'ancrage 31, c'est-à-dire au niveau de sa bordure 33. Plus précisément, cette bordure présentera typiquement un rétrécissement de son épaisseur. Cela engendre un affaiblissement mécanique de la fixation en suspension de la membrane 3 relativement au reste du support 1. L'aspect de l'invention maintenant décrit offre une solution à ce problème. À titre complémentaire ou alternatif à la résolution de ce problème, cet aspect de l'invention permet l'isolation électrique de la membrane relativement au reste du support 1, si elle est électriquement conductrice. Les figures 17 à 23 présentent un exemple de réalisation de cet aspect de l'invention pour la fabrication d'au moins une portion diélectrique. À titre complémentaire ou alternatif à la résolution des deux problèmes précédents, l'aspect qui suit de l'invention peut servir à générer une zone tampon pour que des signaux de type acoustique ne soient pas transmis latéralement au travers de la portion diélectrique fabriquée. Ainsi, la portion diélectrique formera une rupture d'impédance acoustique produite par un changement de matériau à son niveau.

En partant d'un dispositif pour lequel la membrane 3 correspond à la situation illustrée notamment à la figure 3 ou à la figure 15, le dépôt d'une couche de masquage 81 est opéré, comme montré en figure 17. Avantageusement, il s'agit d'un dépôt pleine plaque au-dessus de la face 21 du substrat 2. La couche de masquage peut être en nitrure de silicium. Certaines parties de la couche 81 sont ensuite supprimées par gravure de sorte à ne laisser en place que des parties constituant un masque 82. Dans le cas de la figure 18, le masque 82 couvre au moins une partie de la surface supérieure de la membrane 3. De préférence cependant, le masque 82 ne s'étend que sur une partie principale 32 de la membrane laissant subsister une portion exposée à la bordure 33 de celle-ci. La bordure 33 correspond typiquement à une zone de la membrane 3 raccordée à la zone d'ancrage 31 du support.

L'étape suivante correspondant à la figure 19 est une oxydation du matériau de la couche superficielle du support dans les zones non masquées. Cette oxydation est de préférence une oxydation thermique réalisée à une température avantageusement supérieure à 800°C et avantageusement inférieure à 1250°C, voire 1000°C. On cherche notamment à réaliser une épaisseur oxydée comprise entre 1 micron et 3 microns. Cette phase d'oxydation peut être humide (typiquement en présence de vapeur d'eau) ou sèche (typiquement en présence de dioxygène). Les réactions d'oxydation transforment une couche superficielle en oxyde du matériau initial, notamment du dioxyde de silicium dans un cas préféré. Cette réaction produit une croissance localisée et donc un épaississement des zones considérées. En outre, l'oxydation génère des zones diélectriques.

De préférence, l'oxydation s'opère dans des conditions permettant d'oxyder suivant une profondeur permettant pour le moins d'oxyder totalement l'épaisseur de la bordure 33 de la membrane 3 si celle-ci n'était pas masquée. Cumulativement ou alternativement, la profondeur d'oxydation peut-être suffisante pour atteindre, au niveau de la zone d'ancrage 31, au moins le niveau de profondeur correspondant à la face inférieure de la membrane 3 et avantageusement pour descendre jusqu'au niveau du fond de la cavité 34. D'une manière générale, il est avantageux de s'arranger pour que la profondeur d'oxydation permette de produire une isolation électrique entre la bordure 33 de la membrane 3 et le reste du support 1 via la zone d'ancrage 31. Éventuellement, il est possible de différencier les profondeurs d'oxydation en opérant une première face d'oxydation puis, en opérant une deuxième phase d'oxydation en ayant retiré une partie du masque 82. La portion diélectrique 83 peut être réalisée au moins sur l'une parmi la zone d'ancrage 31 et la bordure 33.

La figure 20 illustre une étape d'enlèvement du masque 82 après l'oxydation.

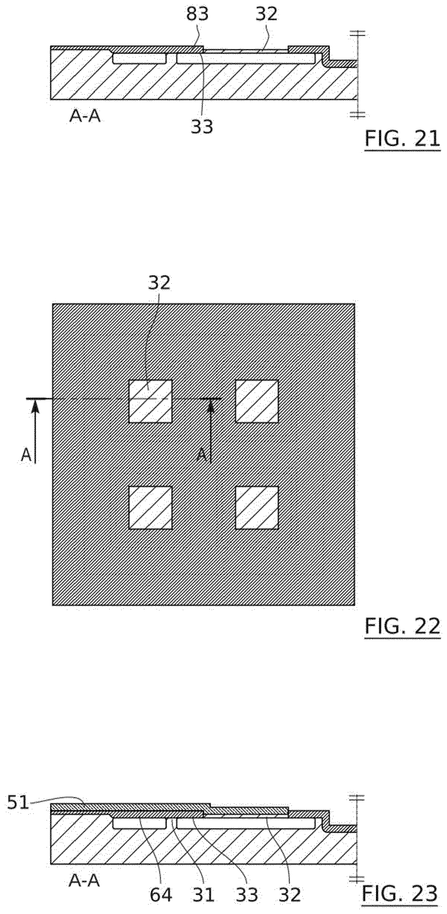

Éventuellement, un aplanissement, par exemple par une technique de polissage mécanique ou mécanochimique peut être mis en oeuvre pour réduire la croissance et/ou les irrégularités produites par l'oxydation. Un résultat est visible en figure 21. La portion diélectrique 83 est présentée et révèlent une isolation produite à ce niveau entre une partie principale de la membrane 32 et l'environnement de la membrane.

La figure 22 montre en vue de dessus une configuration possible du dispositif obtenu après l'oxydation et enlèvement du masque. Dans ce cas de figure, toute une portion périphérique entourant les membranes 3 a été oxydée. Ce cas n'est pas limitatif et pour le moins une partie de raccordement de la membrane 3 au support 5 comprendra la portion diélectrique considérée issue de la phase d'oxydation.

Dans le cas d'un transducteur capacitif, notamment du type CMUT, l'oxydation précédente permet d'isoler la partie principale 3 de la membrane qui, si elle est en matériau conducteur, peut former une des électrodes d'un empilement capacitif. Typiquement, la membrane peut constituer une électrode supérieure en vis-à-vis d'une électrode inférieure formée par le fond de la cavité 34. La cavité 34 forme elle-même un entrefer. On notera que la cavité réalisée par l'invention peut être fabriquée sous vide d'air et donc peut présenter un niveau de vide important, de sorte à améliorer sa caractéristique diélectrique. Dans ce cas de figure, il suffit de raccorder électriquement la membrane 3 à l'équipement électrique adapté, par exemple sous forme du dépôt d'une trace conductrice, de préférence métallique, ici illustrée sous forme d'électrode inférieure 51, mais qui peut-être simplement une reprise de contact.

De préférence, l'oxydation réalisée par l'aspect précédent de l'invention couvre l'intégralité de la surface 21 du support destiné à recevoir la trace conductrice considérée. Dans l'exemple de la figure 23, la portion diélectrique s'étend en effet non seulement sur une partie de bordure 33 de la membrane 3 et sur la zone d'ancrage 31 mais aussi au-dessus du pont 64 et d'une portion de la zone de pourtour 61.

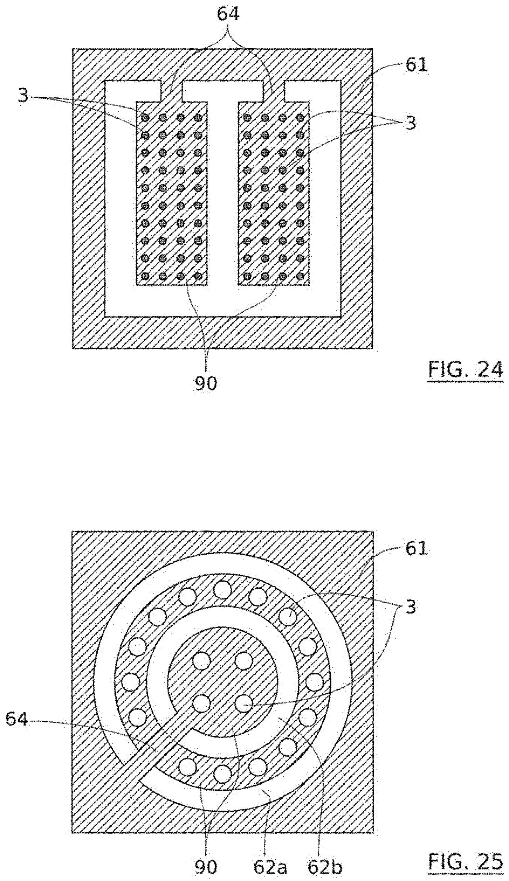

La figure 24 donne un autre exemple de configuration du dispositif de l'invention. Dans ce cas, le dispositif comporte une pluralité de jeux de membranes 3. Un premier jeu de membranes 90 est raccordé par un pont soixante-quatre à une zone de pourtour du dispositif. De même, l'autre jeu 90 est raccordé par un autre pont 64. Les membranes 3 peuvent être réalisées par le procédé précédemment décrit en mettant en oeuvre au moins un aspect parmi la fabrication de parties suspendues par recuit et la fabrication de portions diélectriques par oxydation. Les membranes 3 d'un jeu 90 peuvent être isolées les unes des autres par des tranchées, recouvertes ou non par des ponts, ou ne pas être isolées.

Alternativement, la configuration de la figure 25 est possible. Deux jeux 90 de membranes 3 sont également présentés, mais ils sont cette fois organisés de manière concentrique. Le jeu 90 intérieur est séparé du jeu 90 extérieur par l'intermédiaire d'une tranchée 63b. Le jeu 90 extérieur est séparé du reste du support par une tranchée 63a. Chacun de ces jeux 90 est accessible électriquement par l'intermédiaire d'un pont 64 qui est dans cet exemple unique pour surmonter les deux tranchées 63a, b. Les remarques faites précédemment au regard du mode de réalisation de la figure 24 en ce qui concerne la formation des membranes 3 sont applicables au mode de réalisation de la figure 25.

On notera que dans les modes de réalisation préférés de l'invention, aucune étape de report ou de suppression de couche sacrificielle n'est mise en oeuvre pour la réalisation des parties suspendues. En outre, un nombre limité d'étapes sont mises en oeuvre, le tout sur la base d'un substrat 2 qui peut être un substrat brut de silicium monocristallin.

Sauf indication spécifique du contraire, des caractéristiques techniques décrites en détail pour un mode de réalisation donné peuvent être combinées à des caractéristiques techniques décrites dans le contexte d'autres modes de réalisation décrits à titre exemplaire et non limitatif, dont ceux expliqués en détail ci-dessus. Les aspects de l'invention décrits peuvent néanmoins aussi être mis en œuvre chacun de manière séparée. En particulier, les aspects de l'invention relatifs à la formation de portions diélectriques, de préférence par oxydation localisée, peuvent être mis en oeuvre séparément de ceux relatifs à l'isolation acoustique par tranchées. C'est aussi le cas de l'aspect relatif à la formation de ponts et/ou de membranes à partir d'un recuit de matière de piliers et/ou de matière autour de trous qui peut être considéré isolément.

### REFERENCES

- 1.: Support
- 2.: Substrat
- 21.: Face
- 3.: Membrane
- 31.: Zone d'ancrage
- 32.: Partie principale
- 33.: Bordure
- 34.: Cavité
- 4.: Bord de cavité
- 51.: Electrode inférieure
- 52.: Reprise de contact
- 53.: Couche piézoélectrique
- 54.: Electrode supérieure
- 55.: Reprise de contact
- 56.: Couche isolante

- 61.: Zone de pourtour
- 62a,b,c,d: Tranchée
- 63a,b: Tranchée intermédiaire
- 64.: Pont
- 65.: Caisson

- 71.: Pilier
- 72.: Pilier
- 73.: Trou

- 81.: Couche de masquage
- 82.: Marque
- 83.: Portion diélectrique

- 90.: Jeu de membranes

## Revendications

1. Dispositif microélectronique de type acoustique comprenant un support (1), un jeu d'au moins une membrane (3) suspendue sur une face (21) du support au-dessus d'une cavité (34) par une zone d'ancrage (31), et au moins une tranchée (62a,b,c,d ; 63a,b) d'isolation acoustique disposée de manière adjacente à la membrane, **caractérisé par le fait qu'**il comporte au moins un pont (64) raccordant des portions de deux bords opposés de la tranchée (62a,b,c,d ; 63a,b) afin de relier le support (1) à la zone d'ancrage (31) de la membrane (62a,b,c,d ; 63a,b), ce pont (64) étant situé en surplomb d'au moins une zone de la tranchée (62a,b,c,d ; 63a,b) de sorte à former dans ladite zone de la tranchée (62a,b,c,d ; 63a,b) un caisson d'isolation (65) acoustique en-dessous du pont (64).

2. Dispositif selon la revendication précédente, dans lequel la tranchée (62a,b,c,d ) forme un contour fermé autour du jeu d'au moins une membrane (3).

3. Dispositif selon l'une des revendications précédentes, dans lequel le pont (64) est en surplomb d'une partie seulement de la tranchée (62a,b,c,d ; 63a,b).

4. Dispositif selon l'une des revendications précédentes, comprenant au moins un élément de connexion électrique passant sur le pont (64).

5. Dispositif selon la revendication précédente, comprenant au moins une électrode (51) au-dessus de la membrane (3) et en continuité électrique avec un des au moins un élément de connexion.

6. Dispositif selon la revendication précédente, comprenant un empilement comprenant une première électrode (51) au contact d'une face supérieure de la membrane (3), une couche piézoélectrique (53) et une deuxième électrode (54), la première électrode (51) étant en continuité électrique avec un premier élément de connexion, la deuxième électrode (54) étant en continuité électrique avec un deuxième élément de connexion.

7. Dispositif selon l'une des revendications précédentes, dans lequel le jeu (90) comporte une pluralité de membranes (3), et de préférence dans lequel le dispositif comporte au moins une tranchée intermédiaire (63a,b) d'isolation acoustique entre au moins deux membranes (3) de la pluralité de membranes (3).

8. Dispositif selon l'une des revendications précédentes, comprenant une portion diélectrique (83), la portion diélectrique étant configurée pour isoler électriquement la membrane (3) du support (1).

9. Dispositif selon la revendication précédente, dans lequel au moins une partie superficielle du pont (64) est en matériau diélectrique formant au moins une partie de ladite portion diélectrique (83), et de préférence dans lequel ladite portion diélectrique (83) est formée en outre par au moins une partie située dans la zone d'ancrage (31) et/ou dans une bordure de la membrane (3) raccordée à la zone d'ancrage (31).

10. Dispositif selon l'une des revendications précédentes, comprenant au moins deux jeux (90) d'au moins une membrane (3), les jeux (90) étant concentriques et chacun entouré par une tranchée annulaire (62a,b).

11. Procédé de fabrication d'un dispositif microélectronique de type acoustique comprenant, sur la base d'un support (1), une réalisation d'un jeu d'au moins une membrane (3) suspendue sur une face (21) du support (1) au-dessus d'une cavité (34) par une zone d'ancrage (31) et d'au moins une tranchée d'isolation acoustique disposée de manière adjacente à la membrane (3), **caractérisé par le fait qu'**il comprend la réalisation d'au moins un pont (64) raccordant des portions de deux bords opposés de la tranchée (62a,b,c,d ; 63a,b) afin de relier le support à la zone d'ancrage de la membrane, ce pont étant situé en surplomb d'au moins une zone de la tranchée de sorte à former dans ladite zone de la tranchée un caisson (65) d'isolation acoustique en-dessous du pont (64).

12. Procédé selon la revendication précédente, dans lequel la réalisation du pont (64) comprend :
- une gravure d'une zone de support à partir de la face du support (1), configurée pour former des piliers (72) et/ou des trous (73) dans la zone de la tranchée ;
- un recuit de la zone de la tranchée configuré pour réorganiser la matière des piliers (72), et/ou respectivement de la matière autour des trous, en une nappe orientée parallèlement à la face (21) du support (1) et raccordée aux deux bords opposés de la tranchée (62a,b,c,d ; 63a,b), procédé de préférence dans lequel on opère, outre la gravure de la zone du support (1), une gravure complémentaire configurée pour former une partie de la tranchée hors de la zone du pont.

13. Procédé selon la revendication précédente, dans lequel la réalisation d'au moins une membrane (3) du jeu comprend :
- une gravure du support à partir de la face (21) du support (1), configurée pour former des piliers (71) et/ou des trous dans la zone de la membrane ;
- un recuit de la zone de la membrane configuré pour réorganiser la matière des piliers (71), et/ou respectivement de la matière autour des trous (73), en une nappe orientée parallèlement à la face (21) du support (1) et raccordée au support par la zone d'ancrage (31), procédé de préférence dans lequel la réalisation de la au moins une membrane (3) et la réalisation du pont (64) sont simultanées.

14. Procédé selon l'une des revendications 11 à 13, dans lequel le matériau de la face (21) du support (1) est électriquement conducteur, le procédé comprenant une formation d'une portion diélectrique (83) par une oxydation localisée de la zone d'ancrage (31) et/ou dans une bordure de la membrane (3) raccordée à la zone d'ancrage (31) et configurée pour isoler électriquement la membrane (3) du support.

15. Procédé selon l'une des revendications 11 à 14, dans lequel le matériau de la face (21) du support (1) est électriquement conducteur, le procédé comprenant une formation d'une couche diélectrique sur une face supérieure du pont (64) par une oxydation localisée du pont (64).

## Patentansprüche

1. Mikroelektronische Vorrichtung vom akustischen Typ, die einen Träger (1), einen Satz aus mindestens einer Membran (3), die mittels einer Verankerungszone (31) auf einer Seite (21) des Trägers oberhalb eines Hohlraums (34) aufgehängt ist, und mindestens einen akustischen Isolatiosgraben (62a,b,c,d; 63a,b) umfasst, der an die Membran angrenzend angeordnet ist, **dadurch gekennzeichnet, dass** sie mindestens eine Brücke (64) umfasst, die Abschnitte von zwei gegenüberliegenden Rändern des Grabens (62a,b,c,d; 63a,b) miteinander verbindet, um den Träger (1) mit der Verankerungszone (31) der Membran (62a,b,c,d; 63a,b) zu verbinden, wobei diese Brücke (64) mindestens eine Zone des Grabens (62a,b,c,d; 63a,b) überspannt, sodass in der Zone des Grabens (62a,b,c,d; 63a,b) unterhalb der Brücke (64) eine akustische Isolationskammer (65) gebildet wird.

2. Vorrichtung nach dem vorstehenden Anspruch, wobei der Graben (62a,b,c,d) eine geschlossene Kontur um den Satz aus mindestens einer Membran (3) herum bildet.

3. Vorrichtung nach einem der vorstehenden Ansprüche, wobei die Brücke (64) nur einen Teil des Grabens (62a,b,c,d; 63a,b) überspannt.

4. Vorrichtung nach einem der vorstehenden Ansprüche, die mindestens ein elektrisches Verbindungselement umfasst, das über die Brücke (64) verläuft.

5. Vorrichtung nach dem vorstehenden Anspruch, die mindestens eine Elektrode (51) oberhalb der Membran (3) und in elektrischer Durchgängigkeit mit einem aus dem mindestens einen Verbindungselement umfasst.

6. Vorrichtung nach dem vorstehenden Anspruch, die einen Stapel umfasst, der eine erste Elektrode (51) in Kontakt mit einer Oberseite der Membran (3), eine piezoelektrische Schicht (53) und eine zweite Elektrode (54) umfasst, wobei die erste Elektrode (51) in elektrischer Durchgängigkeit mit einem ersten Verbindungselement steht, wobei die zweite Elektrode (54) in elektrischer Durchgängigkeit mit einem zweiten Verbindungselement steht.

7. Vorrichtung nach einem der vorstehenden Ansprüche, wobei der Satz (90) eine Vielzahl von Membranen (3) umfasst, und wobei die Vorrichtung vorzugsweise mindestens einen zwischenliegenden akustischen Isolationsgraben (63a,b) zwischen mindestens zwei Membranen (3) aus der Vielzahl von Membranen (3) umfasst.

8. Vorrichtung nach einem der vorstehenden Ansprüche, die einen dielektrischen Abschnitt (83) umfasst, wobei der dielektrische Abschnitt dafür ausgelegt ist, die Membran (3) elektrisch vom Träger (1) zu isolieren.

9. Vorrichtung nach dem vorstehenden Anspruch, wobei mindestens ein oberflächlicher Teil der Brücke (64) aus dielektrischem Material ist, das mindestens einen Teil des dielektrischen Abschnitts (83) bildet, und wobei der dielektrische Abschnitt (83) vorzugsweise weiter von mindestens einem Teil gebildet wird, der in der Verankerungszone (31) und/oder in einer mit der Verankerungszone (31) verbunden Randung der Membran (3) liegt.

10. Vorrichtung nach einem der vorstehenden Ansprüche, die mindestens zwei Sätze (90) aus mindestens einer Membran (3) umfasst, wobei die Sätze (90) konzentrisch und je von einem ringförmigen Graben (62a,b) umgeben sind.

11. Verfahren zur Herstellung einer mikroelektronischen Vorrichtung vom akustischen Typ, das, auf der Grundlage eines Trägers (1), ein Ausführen eines Satzes aus mindestens einer Membran (3), die mittels einer Verankerungszone (31) auf einer Seite (21) des Trägers (1) oberhalb eines Hohlraums (34) aufgehängt ist, und mindestens eines akustischen Isolationsgrabens umfasst, der an die Membran (3) angrenzend angeordnet ist, **dadurch gekennzeichnet, dass** es das Ausführen mindestens einer Brücke (64) umfasst, die Abschnitte von zwei gegenüberliegenden Rändern des Grabens (62a,b,c,d; 63a,b) miteinander verbindet, um den Träger mit der Verankerungszone der Membran zu verbinden, wobei diese Brücke mindestens eine Zone des Grabens überspannt, sodass in der Zone des Grabens unterhalb der Brücke (64) eine akustische Isolationskammer (65) gebildet wird.

12. Verfahren nach dem vorstehenden Anspruch, wobei das Ausführen der Brücke (64) umfasst:
- ein Ätzen einer Trägerzone von der Seite des Trägers (1) aus, das dafür ausgelegt ist, Säulen (72) und/oder Löcher (73) in der Zone des Grabens zu bilden;
- ein Glühen der Zone des Grabens, das dafür ausgelegt ist, das Material der Säulen (72) und/bzw. Material um die Löcher herum in eine Lage umzustrukturieren, die parallel zur Seite (21) des Trägers (1) ausgerichtet und mit den zwei gegenüberliegenden Rändern des Grabens (62a,b,c,d; 63a,b) verbunden ist,
wobei bei dem Verfahren vorzugsweise neben dem Ätzen der Zone des Trägers (1) ein zusätzliches Ätzen vorgenommen wird, das dafür ausgelegt ist, einen Teil des Grabens außerhalb der Zone der Brücke zu bilden.

13. Verfahren nach dem vorstehenden Anspruch, wobei das Ausführen mindestens einer Membran (3) des Satzes umfasst:
- ein Ätzen des Trägers von der Seite (21) des Trägers (1) aus, das dafür ausgelegt ist, Säulen (71) und/oder Löcher in der Zone der Membran zu bilden;
- ein Glühen der Zone der Membran, das dafür ausgelegt ist, das Material der Säulen (71) und/bzw. Material um die Löcher (73) herum in eine Lage umzustrukturieren, die parallel zur Seite (21) des Trägers (1) ausgerichtet und mittels der Verankerungszone (31) mit dem Träger verbunden ist,
wobei bei dem Verfahren das Ausführen der mindestens einen Membran (3) und das Ausführen der Brücke (64) vorzugsweise gleichzeitig erfolgen.

14. Verfahren nach einem der Ansprüche 11 bis 13, wobei das Material der Seite (21) des Trägers (1) elektrisch leitend ist, wobei das Verfahren ein Bilden eines dielektrischen Abschnitts (83) mittels eines lokalisierten Oxidierens der Verankerungszone (31) und/oder in einer mit der Verankerungszone (31) verbundenen Randung der Membran (3) umfasst, das dafür ausgelegt ist, die Membran (3) elektrisch vom Träger zu isolieren.

15. Verfahren nach einem der Ansprüche 11 bis 14, wobei das Material der Seite (21) des Trägers (1) elektrisch leitend ist, wobei das Verfahren ein Bilden einer dielektrischen Schicht an einer Oberseite der Brücke (64) mittels eines lokalisierten Oxidierens der Brücke (64) umfasst.

## Claims

1. Acoustic type microelectronic device comprising a support (1), a set of at least one membrane (3) suspended on a face (21) of the support above a cavity (34) by an anchoring zone (31), and at least one acoustic insulation trench (62a,b,c,d; 63a,b) arranged adjacently to the membrane, **characterised by** the fact that it includes at least one bridge (64) connecting portions of two edges opposite the trench (62a,b,c,d; 63a,b) in order to connect the support (1) to the anchoring zone (31) of the membrane (62a,b,c,d; 63a,b), this bridge (64) being situated over at least one zone of the trench (62a,b,c,d; 63a,b) so as to form in said zone of the trench (62a,b,c,d; 63a,b), an acoustic insulation box (65) below the bridge (64).

2. Device according to the preceding claim, wherein the trench (62a,b,c,d) forms a closed contour around the set of at least one membrane (3).

3. Device according to one of the preceding claims, wherein the bridge (64) is over only one portion of the trench (62a,b,c,d; 63a,b).

4. Device according to one of the preceding claims, comprising at least one electrical connection element passing over the bridge (64).

5. Device according to the preceding claim, comprising at least one electrode (51) above the membrane (3) and in electrical continuity with one of the at least one connection element.

6. Device according to the preceding claim, comprising a stack comprising a first electrode (51) in contact with an upper face of the membrane (3), a piezoelectric layer (53) and a second electrode (54), the first electrode (51) being in electrical continuity with a first connection element, the second electrode (54) being in electrical continuity with a second connection element.

7. Device according to one of the preceding claims, wherein the set (90) includes a plurality of membranes (3), and preferably wherein the device includes at least one intermediate acoustic insulation trench (63a,b) between at least two membranes (3) of the plurality of membranes (3).

8. Device according to one of the preceding claims, comprising a dielectric portion (83), the dielectric portion being configured to electrically insulate the membrane (3) of the support (1).

9. Device according to the preceding claim, wherein at least one superficial portion of the bridge (64) is made of dielectric material forming at least one portion of said dielectric portion (83), and preferably wherein said dielectric portion (83) is furthermore formed by at least one portion situated in the anchoring zone (31) and/or an edge of the membrane (3) connected to the anchoring zone (31).

10. Device according to one of the preceding claims, comprising at least two sets (90) of at least one membrane (3), the sets (90) being concentric and each surrounded by an annular trench (62a,b).

11. Method for manufacturing an acoustic type microelectronic device comprising, on the base of a support (1), an embodiment of a set of at least one membrane (3) suspended on a face (21) of the support (1) above a cavity (34) by an anchoring zone (31) and at least one acoustic insulation trench arranged adjacently to the membrane (3), **characterised by** the fact that it comprises the embodiment of at least one bridge (64) connecting portions of two opposite edges of the trench (62a,b,c,d; 63a,b) in order to connect the support to the anchoring zone of the membrane, this bridge being situated over at least one zone of the trench so as to form in said zone of the trench, an acoustic insulation box (65) below the bridge (64).

12. Method according to the preceding claim, wherein the embodiment of the bridge (64) comprises:
- an etching of a support zone from the face of the support (1), configured to form pillars (72) and/or holes (73) in the zone of the trench;
- an annealing of the zone of the trench configured to reorganise the material of the pillars (72), and/or respectively of the material around the holes, in a layer oriented parallel to the face (21) of the support (1) and connected to the two opposite edges of the trench (62a,b,c,d; 63a,b),
method preferably wherein further to the etching of the zone of the support (1), a complementary etching configured to form a portion of the trench outside of the zone of the bridge is performed.

13. Method according to the preceding claim, wherein the embodiment of at least one membrane (3) of the set comprises:
- an etching of the support from the face (21) of the support (1), configured to form pillars (71) and/or holes in the zone of the membrane;
- an annealing of the zone of the membrane configured to reorganise the material of the pillars (71), and/or respectively the material around the holes (73), in a layer oriented parallel to the face (21) of the support (1) and connected to the support by an anchoring zone (31),
method preferably wherein the embodiment of the at least one membrane (3) and the embodiment of the bridge (64) are simultaneous.

14. Method according to one of claims 11 to 13, wherein the material of the face (21) of the support (1) is electrically conductive, the method comprising a formation of a dielectric portion (83) by a localised oxidation of the anchoring zone (31) and/or of an edge of the membrane (3) connected to the anchoring zone (31) and configured to electrically insulate the membrane (3) of the support.

15. Method according to one of claims 11 to 14, wherein the material of the face (21) of the support (1) is electrically conductive, the method comprising a formation of a dielectric layer on an upper face of the bridge (64) by a localised oxidation of the bridge (64).
